# EUROPÄISCHE PATENTSCHRIFT

(11) **EP 3 103 157 B1**
(45) Veröffentlichungstag und Bekanntmachung des Hinweises auf die Patenterteilung: **12.08.2020**
(21) Anmeldenummer: 15703513.0
(22) Anmeldetag: 28.01.2015
(51) Int. Cl.: H01M 10/39

(54) **ELEKTRODENEINHEIT FÜR EINE ELEKTROCHEMISCHE VORRICHTUNG**
ELECTRODE UNIT FOR AN ELECTROCHEMICAL DEVICE
UNITÉ D'ÉLECTRODE POUR UN DISPOSITIF ÉLECTROCHIMIQUE

(30) Priorität: 07.02.2014 EP 14154255
(43) Veröffentlichungstag der Anmeldung: 14.12.2016
(73) Patentinhaber: BASF SE, 67056 Ludwigshafen am Rhein (DE)
(72) Erfinder: DÜRR, Anna Katharina, 67061 Ludwigshafen (DE); ZERPA UNDA, Jesus Enrique, 68519 Viernheim (DE); ACHHAMMER, Günther, 68309 Mannheim (DE); BAYER, Domnik, 69121 Heidelberg (DE); HEIDEBRECHT, Peter, 67346 Speyer (DE); MEUER, Stefan, 67549 Worms (DE)
(74) Vertreter: BASF IP Association
(86) Internationale Anmeldenummer: PCT/EP2015/051667
(87) Internationale Veröffentlichungsnummer: WO 2015/117870

(56) Entgegenhaltungen:
- WO-A1-2012/110219
- JP-A- H0 668 905
- US-A- 4 084 041

## Beschreibung

Die Erfindung betrifft eine Elektrodeneinheit für eine elektrochemische Vorrichtung, umfassend (i) einen Festelektrolyten, der einen Raum für schmelzflüssiges Kathodenmaterial, ausgewählt aus der Gruppe bestehend aus elementarem Schwefel und Polysulfid des Alkalimetall-Anodenmaterials, und einen Raum für schmelzflüssiges Alkalimetall-Anodenmaterial trennt sowie (ii) eine poröse Feststoffelektrode, die sich im Raum für das Kathodenmaterial direkt benachbart zum Festelektrolyten befindet, wobei sich zwischen der Feststoffelektrode und dem Festelektrolyten eine nichtelektronenleitende Zwischenschicht S befindet, dadurch gekennzeichnet, dass die Zwischenschicht S eine Dicke im Bereich von 1,0 bis 5 mm hat und vor der ersten Aufladung der elektrochemischen Vorrichtung vollständig mit einer Polysulfid-Zusammensetzung, enthaltend (A) reine Polysulfide Met₂Sₓ mit Met=Alkalimetall des Alkalimetall-Anodenmaterials ausgewählt aus Lithium, Natrium, Kalium und x ist abhängig von dem Alkalimetall und ist für Na = 2, 3, 4, oder 5 und ist für Li = 2, 3, 4, 5, 6, 7, 8 und ist für K = 2, 3, 4, 5, 6 oder (B) Mischungen der Polysulfide ein und desselben Alkalimetalls aus (A) untereinander, getränkt ist, eine elektrochemische Vorrichtung enthaltend die Elektrodeneinheit, wie in den Ansprüchen definiert, ein Verfahren zur Herstellung einer nichtelektronenleitenden Zwischenschicht S in einer Elektrodeneinheit, wie sie in den Ansprüchen definiert ist, dadurch gekennzeichnet, dass man das die nichtelektronenleitende Zwischenschicht S bildende poröse Ausgangsmaterial einem Druck von weniger als 1 atm aussetzt und es mit der geschmolzenen Polysulfid-Zusammensetzung des Alkalimetalls, welches das Alkalimetall-Anodenmaterial bildet, enthaltend (A) reine Polysulfide Met₂Sₓ mit Met = Alkalimetall des Alkalimetall-Anodenmaterials ausgewählt aus Lithium, Natrium, Kalium und x ist abhängig von dem Alkalimetall und ist für Na = 2, 3, 4, oder 5 und ist für Li = 2, 3, 4, 5, 6, 7, 8 und ist für K = 2, 3, 4, 5, 6 oder (B) Mischungen der Polysulfide ein und desselben Alkalimetalls aus (A) untereinander, tränkt, ein Verfahren zur ersten Aufladung einer elektrochemischen Vorrichtung wie sie in den Ansprüchen definiert ist, dadurch gekennzeichnet, dass man in dem Raum für das schmelzflüssige Kathodenmaterial eine Polysulfidverbindung (I) als Schmelze vorlegt, enthaltend: (A) reine Polysulfide Met₂Sₓ mit Met=Alkalimetall des gewünschten Alkalimetall-Anodenmaterials, ausgewählt aus Lithium, Natrium, Kalium, x ist abhängig von dem Alkalimetall und ist für Na = 2, 3, 4, oder 5 und ist für Li = 2, 3, 4, 5, 6, 7, 8 und ist für K = 2, 3, 4, 5, 6 oder (B) Mischungen der Polysulfide ein und desselben Alkalimetalls aus (A) untereinander und/oder jeweils mit elementarem Schwefel oder (C) Mischungen aus dem jeweiligen Alkalimetallsulfid Met₂S mit elementarem Schwefel und/oder den in (A) oder (B) genannten Polysulfiden Met₂Sₓ, weiterhin in dem Raum für das schmelzflüssige Anodenmaterial eine elektronenleitende Vorrichtung so installiert, dass sie die dem Anodenmaterial zugewandte Oberfläche des Festelektrolyten zumindest im unteren Bereich berührt, Kathodenraum und Anodenraum an einen elektrischen Stromkreis anschließt und durch diese elektrochemische Vorrichtung einen elektrischen Strom schickt, so dass die Polysulfidverbindung (I) elektrolytisch gespalten wird, wobei im Kathodenraum elementarer Schwefel entsteht und im Anodenraum metallisches Alkalimetall und die Verwendung einer nichtelektrodenleitenden Zwischenschicht S in einer Elektrodeneinheit für eine elektrochemische Vorrichtung, umfassend (i) einen Festelektrolyten, der einen Raum für schmelzflüssiges Kathodenmaterial - wie hierin definiert - und einen Raum für schmelzflüssiges Alkalimetall-Anodenmaterial -wie hierin definiert- trennt, sowie (ii) eine poröse Feststoffelektrode, die durch eine nichtelektronenleitende Zwischenschicht S von dem Festelektrolyten getrennt ist, dadurch gekennzeichnet, dass die nichtelektronenleitende Zwischenschicht S eine Dicke im Bereich von 1,0 bis 5 mm hat und vor der ersten Aufladung der elektrochemischen Vorrichtung vollständig mit einer Polysulfid-Zusammensetzung des Alkalimetalls, welches das Alkalimetall-Anodenmaterial bildet, enthaltend (A) reine Polysulfide Met₂Sₓ mit Met=Alkalimetall des Alkalimetall-Anodenmaterials ausgewählt aus Lithium, Natrium, Kalium, x ist abhängig von dem Alkalimetall und ist für Na = 2, 3, 4, oder 5 und ist für Li = 2, 3, 4, 5, 6, 7, 8 und ist für K = 2, 3, 4, 5, 6 oder (B) Mischungen der Polysulfide ein und desselben Alkalimetalls aus (A) untereinander, getränkt ist.

Elektrochemische Vorrichtungen mit einem Raum für schmelzflüssiges Kathodenmaterial, einem Raum für schmelzflüssiges Anodenmaterial, einem Festelektrolyten, der die Räume trennt, sowie einer porösen Elektrode, die sich im Kathodenraum befindet, sind bekannt und werden im Folgenden auch als "elektrochemische Vorrichtung(en) mit Festelektrolyt" bezeichnet.

Ein Beispiel für eine derartige elektrochemische Vorrichtung mit Festelektrolyt ist die sogenannte Natrium-Schwefel-Batterie, die zum Beispiel in Ullmann's Encyclopedia of Industrial Chemistry, Vol. 4, D. Berndt, D. Spahrbier, Kapitel 7.2.2.2., Seiten 608 bis 609, Wiley-VCH (2003) beschrieben ist.

Bei der Natrium-Schwefel-Batterie ist Schwefel das Kathodenmaterial, Natrium das Anodenmaterial und β-Aluminiumoxid der Festelektrolyt sowie ein Graphitfilz die Elektrode, die im Kathodenraum in Kontakt mit dem Schwefel steht.

Der Kathodenraum im Sinne der vorliegenden Erfindung ist der Raum der elektrochemischen Vorrichtung mit Festelektrolyt, in dem beim Laden dieser Zelle Polysulfid zu elementaren Schwefel oxidiert wird und beim Entladen dieser Zelle elementarer Schwefel zu Polysulfid reduziert wird.

Der Anodenraum im Sinne der vorliegenden Erfindung ist der Raum der elektrochemischen Vorrichtung mit Festelektrolyt, in dem Alkalimetallionen, beispielsweise Lithiumionen, Natriumionen oder Kaliumionen, beim Laden dieser Vorrichtung zum elementaren Alkalimetall, beispielsweise Lithium, Natrium oder Kalium, reduziert werden und beim Entladen elementares Alkalimetall, beispielsweise Lithium, Natrium oder Kalium, zu Alkalimetallionen, beispielsweise Lithiumionen, Natriumionen oder Kaliumionen, oxidiert wird.

Die elektrochemischen Vorrichtungen mit Festelektrolyt können als wiederaufladbare Speicher für elektrische Energie, in der Wissenschaft in allgemeiner Form auch "Akkumulator" oder "Sekundärzellen" genannt, verwendet werden. Diese Akkumulatoren generieren durch eine Redox-Reaktion elektrischen Strom und sind somit galvanische Elemente.

Wird andererseits elektrischer Strom durch die elektrochemische Vorrichtung mit Festelektrolyt geschickt, so kann diese Vorrichtung auch zur Elektrolyse, ergo Zerlegung einer chemischen Verbindung - zum Beispiel in ihre elementaren Bestandteile - durch elektrischen Strom, verwendet werden. Üblicherweise spricht man dann in der Wissenschaft in allgemeiner Form von einer Elektrolysezelle. Es ist nach wie vor technisch wünschenswert, eine elektrochemische Vorrichtung zu entwickeln um elektrische Energie im großen Maße zu speichern und im Bedarfsfall in ein Stromnetz abzugeben. Beispielsweise ist es wünschenswert, die durch Windkraftwerke produzierte elektrische Energie zu speichern, um sie zu Zeiten der Flaute ins Stromnetz zum Verbraucher abzugeben.

Hierfür werden große Speicherkapazitäten benötigt, die beispielsweise durch Natrium-Schwefel-Batterien zur Verfügung gestellt werden könnten.

Ein Problem der Natrium-Schwefel-Batterien ist, dass beim Laden der Batterie der elektrische Isolator Schwefel auf der kathodenseitigen Seite der Festelektrolytoberfläche abgeschieden wird, was in der Regel dazu führt, dass beim Laden der Batterie diese Schwefelschicht die Wanderung der Natriumionen zu der Oberfläche des Festelektrolyten blockiert, was wiederum zur Erhöhung des elektrischen Widerstands der Zelle, zur vorzeitigen Polarisierung der Elektrode und zur unvollständigen Ladung der Zelle, ergo Verlust von Kapazität der Batterie, führt.

Ein weiteres Problem der Natrium-Schwefel-Batterie ist, dass bei einem Bruch oder Beschädigung des Festelektrolyten, insbesondere im geladenen Zustand der Batterie, flüssiges Natrium mit flüssigem Schwefel - üblicherweise bei hoher Temperatur, zum Beispiel 300 bis 400 °C - direkt in Berührung kommt und - insbesondere direkt am Ort des Bruchs oder der Beschädigung des Festelektrolyten - eine stark exotherme Reaktion stattfindet, welche beispielsweise zur schlagartigen Verdampfung des Schwefels mit schnellem Druckaufbau in der Zelle führt, wobei diese beschädigt oder zerstört wird und ihren Inhalt freigibt, der mit der umgebenden Atmosphäre heftig reagieren kann und somit letztendlich andere Zellen oder gar die gesamte Batterie beschädigen oder zerstören kann .

GB 1,347,990 A beschreibt einen wiederaufladbaren elektrochemischen Generator des Natrium-Schwefel-Typs mit Schwefelschmelze als Kathodenmaterial, Natriumschmelze als Anodenmaterial, einem β-Aluminiumoxid-Festelektrolyt ("sodium beta alumina") und einer Graphitfilzelektrode, die im Kontakt mit der Schwefelschmelze (Kathodenmaterial) steht, wobei die Graphitfilzelektrode durch eine wenige Mikrometer dünne, poröse Schicht eines elektrisch isolierenden Materials, beispielsweise α-Aluminiumoxid, von dem Festelektrolyt getrennt wird. GB 1,347,990 A offenbart nicht, dass das elektrisch isolierende Material, vorzugsweise vor dem ersten Laden des Generators, mit Alkalimetallpolysufid getränkt ist.

US 4,084,041 beschreibt eine Natrium-Schwefel-Batterie mit Schwefelschmelze und/oder Polysufidschmelze (Kathodenraum), Natriumschmelze (Anodenraum), β-Aluminiumoxid-Festelektrolyt "Beta-alumina") und einer Graphitfilzelektrode, die im Kontakt mit der Schwefelschmelze und dem Festelektrolyt steht, wobei ein Teil der Elektrode mit elektrisch isolierendem Aluminiumoxid überzogen ("coated") ist, so dass ein bestimmter ohmscher Höchstwiderstand erreicht wird und wobei die Elektrode nicht das gesamte Volumen des Kathodenraums ausfüllt. US 4,084,041 offenbart nicht, dass die mit elektrisch isolierendem Aluminiumoxid teilweise überzogen Graphitfilzelektrode, vorzugsweise vor dem ersten Laden der Batterie, mit Alkalipolysulfid getränkt ist.

J.L. Sudworth, A.R. Tilley erwähnen in "The Sodium Sulfur Battery", Chapman and Hall Ltd., 1985 (ISBN 0412 164906), Seite 189, Zeilen 1 bis 3 im Kapitel "The sulfur electrode", dass man eine 1 mm dicke Schicht von α-Aluminiumoxid-Fasern ("ICI Ltd. Saffil low density mat") zwischen den Kohlenstoff-Filz und dem Festelektrolyten einer flachen Plattenzelle anordnen kann. Sudworth und Tilley offenbaren nicht, dass die α-Aluminiumoxid-Schicht mit Alkalimetallpolysulfid vollständig getränkt ist.

Aufgabe der vorliegenden Erfindung war es, eine elektrochemische Vorrichtung mit Festelektrolyt bereitzustellen, die die Nachteile des Standes der Technik nicht aufweist, die - insbesondere vor der ersten Entladung der Zelle - bei Beschädigung oder Bruch des Festelektrolyten weniger Wärme freisetzt und somit eine erhöhte Sicherheit der elektrochemischen Zelle und letztendlich der gesamten Batterie bietet, wobei der Innenwiderstand der Zelle immer noch gut ist.

Gelöst wird die Aufgabe durch die Elektrodeneinheit, wie hierin beansprucht und beschrieben, im Folgenden auch als "erfindungsgemäße Elektrodeneinheit" bezeichnet, durch die elektrochemische Vorrichtung, wie hierin beansprucht und beschrieben, im Folgenden auch als "erfindungsgemäße elektrochemische Vorrichtung" bezeichnet, durch das Verfahren zur Herstellung einer nichtelektronenleitenden Zwischenschicht S, wie hierin beansprucht und beschrieben, durch das Verfahren zur ersten Aufladung einer elektrochemischen Vorrichtung, wie hierin beansprucht und beschrieben sowie durch die Verwendung einer nicht elektronenleitenden Zwischenschicht S in einer Elektrodeneinheit wie hierin beansprucht und beschrieben.

Die erfindungsgemäße Elektrodeneinheit befindet sich im Raum für schmelzflüssiges Kathodenmaterial einer elektrochemischen Vorrichtung, die einen Raum für schmelzflüssiges Kathodenmaterial, ausgewählt aus der Gruppe bestehend aus elementarem Schwefel und Polysulfid des Alkalimetall-Anodenmaterials - dieses Polysulfid vorzugsweise wie im folgenden definiert - und einen Raum für schmelzflüssiges Alkalimetall-Anodenmaterial - dieses vorzugsweise wie im folgenden definiert - umfasst, die durch einen Festelektrolyten voneinander getrennt sind, wobei die Elektrodeneinheit eine dem Festelektrolyten direkt benachbarte poröse Feststoffelektrode und eine nicht elektronenleitende Zwischenschicht S zwischen der Feststoffelektrode und dem Festelektrolyten umfasst und diese Zwischenschicht S vor der ersten Aufladung der elektrochemischen Vorrichtung vollständig mit einer Polysulfid-Zusammensetzung des Alkalimetalls, welches das Alkalimetall-Anodenmaterial bildet, getränkt ist, enthaltend (A) reine Polysulfide Met₂Sₓ mit Met = Alkalimetall des Alkalimetall-Anodenmaterials ausgewählt aus Lithium, Natrium, Kalium, insbesondere Natrium und x ist abhängig von dem Alkalimetall und ist für Na = 2, 3, 4, oder 5, vorzugsweise 3, 4 oder 5, insbesondere 4 und ist für Li = 2, 3, 4, 5, 6, 7, 8, vorzugsweise 3, 4, 5, 6 7, oder 8 und ist für K = 2, 3, 4, 5, 6, vorzugsweise 3, 4 oder 5, insbesondere 5, oder (B) Mischungen der Polysulfide ein und desselben Alkalimetalls aus (A) untereinander. Diese Polysulfid-Zusammensetzung wird im Folgenden auch als "erfindungsgemäße Polysulfid-Zusammensetzung" bezeichnet.

"Vollständig" bedeutet in diesem Zusammenhang, dass sich in der gesamten offenen Porosität des die nichtelektronenleitende Zwischenschicht S bildenden Ausgangsmaterials praktisch ausschließlich die erfindungsgemäße Polysulfid-Zusammensetzung befindet. Die offene Porosität wird wie folgt bestimmt: Man ermittelt auf üblichem Wege - beispielsweise durch Bestimmung des Gewichts und des Volumens - die Schüttdichte des die Zwischenschicht S bildenden Ausgangsmaterials. Man ermittelt auf üblichem Wege oder entnimmt aus der Literatur die intrinsische Dichte des die Zwischenschicht S bildenden Ausgangsmaterials und errechnet die offene Porosität wie folgt: 1 - Schüttdichte des Probekörpers des genannten Ausgangsmaterials / intrinsische Dichte des genannten Ausgangsmaterials welches den Probekörper bildet. Anschaulich ist die offene Porosität beispielsweise der Zwischenraum zwischen den Fasern des die Zwischenschicht S bildenden Ausgangsmaterials. Das die nichtelektronenleitende Zwischenschicht S bildende Ausgangsmaterial wird hierin näher beschrieben.

Als Kathodenmaterial wird üblicherweise ein Material eingesetzt, das mit dem Anodenmaterial chemisch reagieren kann, üblicherweise ist es unter den Bedingungen des Betriebs der elektrochemischen Vorrichtung schmelzflüssig.

Das schmelzflüssige Kathodenmaterial wird ausgewählt aus der Gruppe bestehend aus elementarem Schwefel und einem Polysulfid des Alkalimetall-Anodenmaterials, mit anderen Worten, des Alkalimetalls das das Alkalimetall-Anodenmaterial bildet. Bevorzugtes schmelzflüssiges Kathodenmaterial ist elementarer Schwefel alleine oder elementarer Schwefel in Kombination mit Polysulfiden des Alkalimetalls, welches das Alkalimetall-Anodenmaterial bildet.

Als Polysulfide des Alkalimetalls, welches das Alkalimetall-Anodenmaterial bildet, kommen vorzugsweise (A) reine Polysulfide Met₂Sₓ mit Met = Alkalimetall des Alkalimetall-Anodenmaterials ausgewählt aus Lithium, Natrium, Kalium, insbesondere Natrium und x ist abhängig von dem Alkalimetall und ist für Na = 2, 3, 4, oder 5, vorzugsweise 3, 4 oder 5, insbesondere 4 und ist für Li = 2, 3, 4, 5, 6, 7, 8, vorzugsweise 3, 4, 5, 6 7, oder 8 und ist für K = 2, 3, 4, 5, 6, vorzugsweise 3, 4 oder 5, insbesondere 5, in Frage oder (B) Mischungen der Polysulfide ein und desselben Alkalimetalls aus (A) untereinander und/oder jeweils mit elementarem Schwefel, (C) Mischungen aus dem jeweiligen Alkalimetallsulfid Met₂S mit elementarem Schwefel und/oder den in (A) oder (B) genannten Polysulfiden Met₂Sₓ.

Das schmelzflüssige Kathodenmaterial kann schmelzflüssig (geschmolzener Feststoff) oder als Feststoff, vorzugsweise schmelzflüssig, in die erfindungsgemäße elektrochemische Vorrichtung eingefüllt werden, liegt bei deren Ladung, Entladung und Betrieb, üblicherweise bei einer Temperatur im Bereich von 300 bis 400 °C, in flüssigem geschmolzenen Zustand vor.

Das Alkalimetall-Anodenmaterial wird ausgewählt aus der Gruppe bestehend aus Lithium, Natrium und Kalium, bevorzugt Natrium, Kalium, insbesondere Natrium.
Das schmelzflüssige Alkalimetall-Anodenmaterial wird im Sinne der Erfindung üblicherweise durch die Elektrolyse des Kathodenmaterials gebildet, kann aber auch als Feststoff in die erfindungsgemäße elektrochemische Vorrichtung eingefüllt werden und liegt bei deren Ladung, Entladung und Betrieb, üblicherweise bei einer Temperatur im Bereich von 300 bis 400 °C, im flüssigen geschmolzenen Zustand, ergo schmelzflüssig, vor.

Das schmelzflüssige Anodenmaterial, ausgewählt aus der Gruppe bestehend aus Lithium, Natrium und Kalium, bevorzugt Natrium, Kalium, insbesondere Natrium, wird üblicherweise in einem Behälter, der mit dem Anodenraum verbunden ist und sich außerhalb der eigentlichen elektrochemischen Zelle befindet, aufbewahrt. Im entladenen Zustand der elektrochemischen Zelle ist dieser Vorratsbehälter in der Regel praktisch leer, und im geladenen Zustand der elektrochemischen Zelle ist dieser Vorratsbehälter in der Regel praktisch voll.

Das schmelzflüssige Anodenmaterial steht üblicherweise in elektrischem Kontakt mit einem externen Stromkreis, üblicherweise über eine geeignete Stromabnehmervorrichtung.

Der Festelektrolyt, der den Raum für das schmelzflüssige Kathodenmaterial von dem Raum für das schmelzflüssige Alkalimetall-Anodenmaterial trennt, ist üblicherweise ein polykristallines keramisches Material, welches eine lonenleitfähigkeit für die dem Alkalimetall-Anodenmaterial entsprechenden Alkalimetallionen hat, vorzugsweise für Lithiumionen oder Natriumionen oder Kaliumionen, besonders bevorzugt für Natriumionen oder Kaliumionen, insbesondere für Natriumionen.

Ein gut geeignetes polykristallines keramisches Material enthält Aluminiumoxideinheiten und Alkalimetalloxideinheiten desjenigen Alkalimetalls, für dessen Ionen die Leitfähigkeit beabsichtigt wird, vorzugsweise Lithium oder Natrium oder Kalium, besonders bevorzugt Natrium oder Kalium, insbesondere Natrium.

Für eine erfindungsgemäße elektrochemische Vorrichtung, deren Alkalimetall-Anodenmaterial Lithium ist, kommen beispielsweise folgende Materialien als Festelektrolyt in Frage: Lithiumdotierte Perowskite, Verbindungen des Typs LISICON mit der allgemeinen Formel Li₂₊₂ₓZn₁₋ₓGeO₄, Li-Beta-Aluminiumoxid, Lithium-lonen-leitende Festelektrolyte mit Granatstruktur, zum Beispiel solche wie in WO 2009/003695 A oder WO 2005/085138 A beschrieben.

Für eine erfindungsgemäße elektrochemische Vorrichtung, deren Alkalimetall-Anodenmaterial Kalium ist, kommen beispielsweise folgende Materialien in Frage: ein fester polykristalliner Kalium-Ionenleiter mit einer β"-Al₂O₃-Struktur, wie er in EP 1 672 098 A2, unter anderem in [0013], [0016] bis [0019] und den einschlägigen Beispielen beschrieben ist und dessen Offenbarung hierein ausdrücklich aufgenommen ist.

Für eine erfindungsgemäße elektrochemische Vorrichtung, deren Alkalimetall-Anodenmaterial Natrium ist, kommt vorzugsweise natriumhaltiges Aluminiumoxid in Frage.
Natriumhaltiges Aluminiumoxid, auch "Natriumaluminat" genannt, ist bekannt. Es wird auch in Fachkreisen und der Literatur als β-Alumiumoxid oder β-Al₂O₃ bezeichnet, siehe zum Beispiel Ullmann's Encyclopedia of Industrial Chemistry, 6th Edition, 2000 Electronic Release, Wiley, Stichwort: "Aluminium Oxide" Punkt 1.6. Das molare Verhältnis von Na₂O: Al₂O₃ im Natriumaluminat liegt üblicherweise im Bereich von 1:1 bis 1:11.

Der Begriff β-Aluminiumoxid wird in Fachkreisen und der Literatur insbesondere für Natriumaluminate verwendet, die eine hexagonale Kristallstruktur mit idealerweise der Raumgruppe P6₃/mmc haben.

Natriumaluminat mit einer hexagonalen Kristallstruktur jedoch idealerweise einer Raumgruppe R/3m wird als β"-Aluminiumoxid bezeichnet.

Im Folgenden wird der Begriff "Beta-Aluminiumoxid" verwendet, der sowohl β-Aluminiumoxid als auch β"-Aluminiumoxid, letzteres bevorzugt, umfassen soll. Ferner soll der hierin verwendete Begriff Beta-Aluminiumoxid jegliche Mischungen oder Phasengemische aus β-Aluminiumoxid und β"-Aluminiumoxid umfassen, vorzugsweise solche in welchen der Anteil an β"-Aluminiumoxid größer als 90 Gew.-%, besonders bevorzugt größer als 95 Gew.-% ist.

Die Geometrie der Festelektrolyte, vorzugsweise der Beta-Aluminiumoxide, kann sehr mannigfaltig sein, beispielsweise vieleckige, flache Körper oder massive Stäbe mit vieleckiger oder runder oder ovaler Querschnittsgeometrie oder lange Hohlkörper jeglicher Querschnittsgeometrie, beispielsweise rechteckig, quadratisch, vieleckig, oval, rund, welche unverschlossen oder einseitig verschlossen sein können.

Gut geeignete Festelektrolyt-Formkörper sind beispielsweise Stäbe jeglicher Querschnittsgeometrie, zum Beispiel rechteckig, quadratisch, vieleckig, oval, rund, vorzugsweise haben die Stäbe zylindrische Geometrie. Weiterhin bevorzugt sind als Festelektrolyt-Formkörper lange Hohlkörper jeglicher Querschnittsgeometrie, beispielsweise rechteckig, quadratisch, vieleckig, oval, rund, besonders bevorzugt sind zylindrische Formkörper, ergo Rohre, die beidseitig offen oder vorzugsweise einseitig verschlossen sein können.

Ganz besonders bevorzugt als Festelektrolyt, vorzugsweise Beta-Aluminiumoxid-Festelektrolyte, sind einseitig geschlossene zylindrische Rohre.

Eine Komponente der erfindungsgemäßen Elektrodeneinheit ist die poröse Feststoffelektrode. Sie ist im Allgemeinen elektrisch leitend (Elektronenleitung) und befindet sich im Raum für das Kathodenmaterial - welches oben näher beschrieben ist - direkt benachbart zum Festelektrolyten. Üblicherweise steht die poröse Feststoffelektrode im elektrischen Kontakt mit dem üblicherweise schmelzflüssigen Kathodenmaterial, welches oben näher beschrieben ist, sowie einem externen Stromkreis, üblicherweise über eine geeignete Stromabnehmervorrichtung.

Üblicherweise ist die poröse Feststoffelektrode weiterhin praktisch resistent gegen das schmelzflüssige Kathodenmaterial, welches oben näher beschrieben ist. Praktisch resistent bedeutet in diesem Zusammenhang, dass das Material, das die poröse Feststoffelektrode bildet, mit dem schmelzflüssigen Kathodenmaterial nicht unter Zersetzung oder Korrosion chemisch oder elektrochemisch reagiert.

Gut geeignet als Material für die poröse Feststoffelektrode sind beispielsweise amorpher Kohlenstoff, Graphit, glasartiger Kohlenstoff (im Englischen auch als "vitreous carbon" bezeichnet), vorzugsweise Graphitfilz, Graphitschaum, (im Englischen auch als "vitreous carbon foam" bezeichnet). Besonders bevorzugt ist Graphitfilz, der bekannt ist und beispielsweise in J.L. Sudworth, A.R. Tilley,,,The Sodium Sulfur Battery", Chapman and Hall Ltd., 1985 (ISBN 0412 164906) in Kapitel 5.3.1 und 5.3.2, Seiten 159 bis 164 beschrieben wird.

Das Material für die poröse Feststoffelektrode, vorzugsweise der Graphit oder Graphitfilz, kann zum Teil oder vollständig dahingehend modifiziert sein, dass es durch die oben beschriebenen geschmolzenen Polysulfide besser benetzt wird als durch geschmolzenen elementaren Schwefel. Beispielsweise wird das Material für die poröse Feststoffelektrode, vorzugsweise der Graphit oder Graphitfilz, hierzu mit Sulfiden oder Oxiden der Gruppen 1, 2 oder 3 des Periodensystems der Elemente, wie Aluminiumoxid (Al₂O₃), teilweise oder praktisch vollständig getränkt, so wie zum Beispiel in US 4,084,041 beschrieben.

Die poröse Feststoffelektrode kann den Raum für das Kathodenmaterial vollständig oder zum Teil ausfüllen. Vorzugsweise füllt die poröse Feststoffelektrode den Raum für das Kathodenmaterial zum Teil aus und zwar direkt benachbart zum Festelektrolyten, lediglich von diesem räumlich getrennt durch die nicht elektronenleitende Zwischenschicht S, die unten näher beschrieben wird, so dass üblicherweise folgender Aufbau entsteht: Festelektrolyt / Zwischenschicht S / poröse Feststoffelektrode, zum Beispiel: Beta-Aluminiumoxid-Festelektrolyt / nicht elektronenleitende Zwischenschicht S / poröse Feststoffelektrode aus Graphitfilz.

Die poröse Feststoffelektrode, vorzugsweise der Graphit oder Graphitfilz, bedeckt die Oberfläche des Festelektrolyten auf der dem Kathodenmaterial zugewandten Seite üblicherweise vollständig oder aber teilweise, beispielsweise zu 50 bis 100 %, bevorzugt zu 90 bis 100 % der Oberfläche, wobei der Bodenbereich des Festelektrolyten, beispielsweise der Boden von einseitig geschlossenen zylindrischen Rohren, üblicherweise in die Berechnung nicht einbezogen wird.

Das Material - hierin auch "Ausgangsmaterial" genannt -, welches erfindungsgemäß die Polysulfidverbindung zur Bildung der nichtelektronenleitenden Zwischenschicht S aufnimmt, wird ausgewählt aus Aluminiumoxid (Al₂O₃), Siliziumdioxid, beispielsweise Glasfasern, Mischoxide des Aluminiums mit Silizium, Silikaten und Alumosilikaten. Diese Materialien haben unter normalen Bedingungen, zum Beispiel 25°C, 1 atm, praktisch keine elektrische Leitfähigkeit.

Das Ausgangsmaterial für die nichtelektronenleitende Zwischenschich S sowie die nichtelektronenleitende Zwischenschicht S selbst sind üblicherweise porös mit im Allgemeinen (i) einer offenen Porösität im Bereich von 50 bis 99,99 %, vorzugsweise 80 bis 99 %, besonders bevorzugt 90 bis 95 %, -wobei sich die offene Porosität wie folgt errechnet: 1 - (Schüttdichte des Probekörpers / Dichte des Materials welches den Probekörper bildet) x 100 - und (ii) einem mittleren Porendurchmesser von üblicherweise im Bereich von 1 bis 10 Mikrometer, gemessen mit der Methode der optischen Mikroskopie.

Üblicherweise ist die Grundlage der nichtelektronenleitenden Zwischenschicht S ein flächiges Gebilde - beispielseise Gewebe, Filz oder Matte - von Fasern ausgewählt aus den Materialien, wie oben beschrieben, vorzugsweise ausgewählt aus Fasern aus Aluminiumoxid, beispielsweise Saffil ® der Firma Saffil, und/oder Silziumdioxid, beispielsweise Glasfasern.

Die Dicke der nichtelektronenleitenden Zwischenschicht S liegt erfindungsgemäß im Bereich von 1,0 bis 5 mm, vorzugsweise 1,0 bis 3 mm, besonders bevorzugt im Bereich von 1 bis 2 mm.

Die nichtelektronenleitende Zwischenschicht S ist zwischen der porösen Feststoffelektrode und dem Festelektrolyten angeordnet und zwar praktisch schlüssig zur Festelektrolytoberfläche.

Die nicht elektronenleitende Zwischenschicht S bedeckt üblicherweise praktisch die gesamte Fläche der Feststoffelektrode, die dem Festelektrolyten zugewandt ist.

Die nichtelektronenleitende Zwischenschicht S ist vor der ersten Aufladung der elektrochemischen Vorrichtung vollständig mit einer Polysulfid-Zusammensetzung des Alkalimetalls, welches das Alkalimetall-Anodenmaterial bildet, getränkt, enthaltend (A) reine Polysulfide Met₂Sₓ mit Met = Alkalimetall des Alkalimetall-Anodenmaterials ausgewählt aus Lithium, Natrium, Kalium, insbesondere Natrium und x ist abhängig von dem Alkalimetall und ist für Na = 2, 3, 4, oder 5, vorzugsweise 3, 4 oder 5, insbesondere 4 und ist für Li = 2, 3, 4, 5, 6, 7, 8, vorzugsweise 3, 4, 5, 6 7, oder 8 und ist für K = 2, 3, 4, 5, 6, vorzugsweise 3, 4 oder 5, insbesondere 5, oder (B) Mischungen der Polysulfide ein und desselben Alkalimetalls aus (A) untereinander. Diese erfindungsgemäße Polysulfid-Zusammensetzung ist vorzugsweise gleichmäßig über die gesamte nichtelektronenleitende Zwischenschicht S verteilt.

In der Regel enthält die nichtelektronenleitende Zwischenschicht S auch nach der ersten Aufladung der elektrochemischen Vorrichtung, beispielsweise während deren Betrieb oder Entladung oder Wiederaufladung, die erfindungsgemäße Polysulfid-Zusammensetzung.
Ein gut geeignetes Verfahren zur Bildung der die erfindungsgemäße Polysulfid-Zusammensetzung enthaltenden Zwischenschicht S ist die Tränkung des Ausgangsmaterials für die nicht-elektronenleitenden Zwischenschicht S, wie vorher beschrieben, beispielsweise Aluminiumoxidfasern und/oder Saffil®-Fasern. Vorzugsweise geschieht diese Tränkung unter praktisch wasserfreien und praktisch sauerstofffreien oder nicht-oxidierenden Bedingungen.

In einem bevorzugten Verfahren zur Bildung der die erfindungsgemäße Polysulfid-Zusammensetzung enthaltenden Zwischenschicht S geht man wie folgt vor:
Das Ausgangsmaterial für die Zwischenschicht S, beispielsweise Aluminiumoxidfasern und/oder Saffil®-Fasern, wird, vorzugsweise in Form eines einem Blatt Papier ähnlichen Gebildes, auf die dem Kathodenraum zugewandte Oberfläche des Festelektrolyten, beispielsweise einem hierin beschriebenen einseitig geschlossenen zylindrischen Rohr, aufgebracht, im Falle des genannten zylindrischen Rohres beispielsweise durch Wickeln. Die elektrochemische Vorrichtung mit der so vorbereiteten Elektrodeneinheit bzw. Festelektrolyt wird zusammengebaut und in dem Kathodenraum wird ein Unterdruck erzeugt, beispielsweise durch Abpumpen zumindest eines Teils des darin befindlichen Gases; der Druck im Kathodenraum beträgt dann beispielsweise 10 bis 20 mbar (abs.). Dann wird, üblicherweise in geschmolzener Form, die erfindungsgemäße Polysulfid-Zusammensetzung des Alkalimetalls, welches das Anodenmaterial bilden soll, in den unter vermindertem Druck gehaltenen Kathodenraum, vorzugsweise aus einem Vorratsbehälter, übergeführt. Hierbei steht üblicherweise die erfindungsgemäße Polysulfid-Zusammensetzung im Vorratsbehälter zunächst unter einem höheren Druck als jenem im Kathodenraum. Bevorzugte erfindungsgemäße Polysulfid-Zusammensetzungen sind beispielsweise (i) reine Polysulfide Na₂Sₓ mit x = 2, 3, 4 oder 5, vorzugsweise 3, 4 oder 5, insbesondere 4 oder 5 oder (ii) Mischungen der Polysulfide aus (i).

Dieses Vorgehen bewirkt in der Regel eine vollständige Tränkung der nichtelektronenleitenden Zwischenschicht S und der porösen Feststoffelektrode, wobei "vollständig" wie oben definiert ist. Nach dieser üblicherweise "erste Befüllung" genannten Konditionierung kann die erfindungsgemäße elektrochemische Vorrichtung, üblicherweise durch Anlegen eines Stroms oder elektrischen Spannung, geladen werden.

Eine gut geeignete Ausführungsform der erfindungsgemäßen Elektrodeneinheit und der sie enthaltenden erfindungsgemäßen elektrochemischen Vorrichtung wird im Folgenden beschrieben.

Hierin ist der Festelektrolyt ein zylindrisches, einseitig geschlossenes Rohr aus Beta-Aluminiumoxid, beispielsweise mit einem Innendurchmesser im Bereich von 20 bis 60 mm und einer Länge im Bereich von 0,05 bis 2 m, beispielsweise einer Länge im Bereich von 0,5 bis 2 m und einer Wandstärke im Bereich von 0,5 bis 3 mm. Im Inneren dieses Festelektrolyten befindet sich in dieser Ausführungsform das schmelzflüssige Alkalimetall-Anodenmaterial Natrium.

Auf der Außenseite dieses zylindrischen einseitig geschlossenen Festelektrolyten befindet sich in dieser Ausführungsform die nichtelektronenleitende Zwischenschicht S aus vorzugsweise Fasern aus Aluminiumoxid, beispielsweise Saffil ® der Firma Saffil, oder Siliziumdioxid, beispielsweise Glasfasern, die vor der ersten Aufladung vorzugsweise (i) reine Polysulfide Na₂Sₓ mit x = 2, 3, 4, oder 5, vorzugsweise 3, 4 oder 5, insbesondere 4 oder (ii) Mischungen der Polysulfide aus (i) enthält. Die Dicke dieser nichtelektronenleitenden Zwischenschicht S liegt in dieser Ausführungsform üblicherweise im Bereich von 1,0 bis 5 mm, vorzugsweise 1,0 bis 3 mm, besonders bevorzugt im Bereich von 1 bis 2 mm. An diese Zwischenschicht S schließt sich, den zylindrischen einseitig geschlossenen Festelektrolyt außen umhüllend, die poröse Feststoffelektrode wie oben beschrieben an, deren Material oben beschrieben ist, vorzugsweise ist es Graphit oder Graphitfilz.

Die poröse Feststoffelektrode ist in der Regel und in dieser Ausführungsform über einen Elektronenleiter, beispielsweise ein Stromabnehmer oder das metallische Zellgehäuse der elektrochemischen Vorrichtung selbst, mit einem äußeren Stromkreis verbunden.

Die poröse Feststoffelektrode wird üblicherweise und in dieser Ausführungsform von einer in der Regel aus Metall, z.B. Edelstahl, gefertigten Vorrichtung, beispielsweise der metallischen Behälterwand des Kathodenraums, umschlossen.

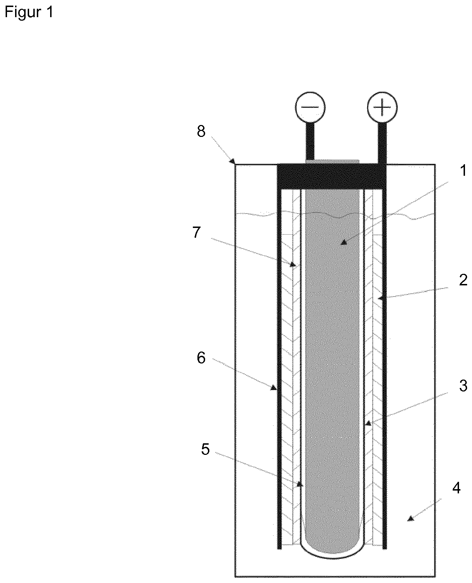

Die voranstehend beschriebene gut geeignete Ausführungsform der erfindungsgemäßen Elektrodeneinheit und der erfindungsgemäßen elektrochemischen Vorrichtung ist beispielsweise in Figur 1 dargestellt, worin die Bezugszeichen die folgende Bedeutung haben:
- 1: Verdrängerkörper
- 2: Poröse Feststoffelektrode, beispielsweise aus Graphitfilz
- 3: Festelektrolyt, beispielsweise aus Beta-Aluminiumoxid
- 4: Kathodenraum, beispielsweise mit schmelzflüssigem Natriumpolysulfid und Schwefel
- 5: Anodenraum, beispielsweise mit schmelzflüssigem Natriummetall
- 6: Stromabnehmer
- 7: Zwischenschicht S, beispielsweise Saffil® mit erfindungsgemäßer Polysulfid-Zusammensetzung getränkt
- 8: Zellgehäuse

Gegenstand der vorliegenden Erfindung ist auch ein Verfahren zur Herstellung einer nichtelektronenleitenden Zwischenschicht S in einer erfindungsgemäßen Elektrodeneinheit, wobei man das die nichtelektronenleitende Zwischenschicht S bildende poröse Ausgangsmaterial einem Druck von weniger als 1 atm, beispielsweise 10 bis 20 mbar (abs.) aussetzt und es mit der geschmolzenen erfindungsgemäßen Polysulfid-Zusammensetzung tränkt.

Hierbei ist ein bevorzugtes Ausgangsmaterial für die nichtelektronenleitende Zwischenschicht S Aluminiumoxidfasern und/oder Saffil®-Fasern, vorzugsweise in flächiger Gestalt, zum Beispiel als Gewebe, Filz oder ähnliches. Hierbei bevorzugte erfindungsgemäße Polysulfid-Zusammensetzungen sind beispielsweise (i) reine Polysulfide Na₂Sₓ mit x = 2, 3, 4 oder 5, vorzugsweise 3, 4 oder 5, insbesondere 4 oder 5 oder (ii) Mischungen der Polysulfide aus (i).

Ein gut geeignetes derartiges Verfahren zur Herstellung einer nichtelektronenleitenden Zwischenschicht S in einer erfindungsgemäßen Elektrodeneinheit wird wie folgt durchgeführt:

Das Ausgangsmaterial für die nichtelektronenleitende Zwischenschicht S wird auf die dem Kathodenraum zugewandte Oberfläche des Festelektrolyten aufgebracht. Dann wird die Feststoffelektrode auf die Zwischenschicht S aufgebracht. Die elektrochemische Vorrichtung mit der so vorbereiteten Elektrodeneinheit bzw. Festelektrolyt wird zusammengebaut und in dem Kathodenraum wird ein Unterdruck erzeugt, beispielsweise 10 bis 20 mbar (abs.). Dann wird, üblicherweise in geschmolzener Form, die erfindungsgemäße Polysulfid-Zusammensetzung des Alkalimetalls, welches das Anodenmaterial bilden soll, in den unter vermindertem Druck gehaltenen Kathodenraum übergeführt.
Bevorzugte erfindungsgemäße Polysulfid-Zusammensetzungen sind beispielsweise (i) reine Polysulfide Na₂Sₓ mit x = 2, 3, 4 oder 5, vorzugsweise 3, 4 oder 5, insbesondere 4 oder 5 oder (ii) Mischungen der Polysulfide aus (i).

Eine Ausführungsform des Verfahrens zur Herstellung einer nichtelektronenleitenden Zwischenschicht S in einer erfindungsgemäßen Elektrodeneinheit ist im Folgenden beschrieben:
Das Ausgangsmaterial für die nichtelektronenleitende Zwischenschicht S, beispielsweise Aluminiumoxidfasern und/oder Saffil®-Fasern, wird, vorzugsweise in Form eines einem Blatt Papier ähnlichen Gebildes, auf die dem Kathodenraum zugewandte Oberfläche des Festelektrolyten, beispielsweise einem hierin beschriebenen einseitig geschlossenen zylindrischen Rohr, vorzugsweise aus Beta-Aluminiumoxid, aufgebracht, im Falle des genannten zylindrischen Rohres beispielsweise durch Wickeln. Dann wird die Feststoffelektrode, vorzugsweise aus Graphitfilz, auf die Zwischenschicht S aufgebracht. Die elektrochemische Vorrichtung mit der so vorbereiteten Elektrodeneinheit bzw. Festelektrolyt wird zusammengebaut und in dem Kathodenraum wird ein Unterdruck erzeugt, beispielsweise durch Abpumpen zumindest eines Teils des darin befindlichen Gases; der Druck im Kathodenraum beträgt dann beispielsweise 10 bis 20 mbar (abs.). Dann wird, üblicherweise in geschmolzener Form, die erfindungsgemäße Polysulfid-Zusammensetzung des Alkalimetalls, welches das Anodenmaterial bilden soll, in den unter vermindertem Druck gehaltenen Kathodenraum, vorzugsweise aus einem Vorratsbehälter, übergeführt. Hierbei steht üblicherweise diese erfindungsgemäße Polysulfid-Zusammensetzung im Vorratsbehälter zunächst unter einem höheren Druck als jenem im Kathodenraum. Bevorzugte erfindungsgemäße Polysulfid-Zusammensetzungen sind hierbei beispielsweise (i) reine Polysulfide Na₂Sₓ mit x = 2, 3, 4 oder 5, vorzugsweise 3, 4 oder 5, insbesondere 4 oder 5 oder (ii) Mischungen der Polysulfide aus (i).

Dieses Vorgehen bewirkt in der Regel eine vollständige Tränkung der Zwischenschicht S und der porösen Feststoffelektrode, wobei "vollständig" wie oben definiert ist. Nach dieser üblicherweise "erste Befüllung" genannten Konditionierung kann die elektrochemische Vorrichtung, üblicherweise durch Anlegen eines Stroms oder einer elektrischen Spannung, geladen werden.

Gegenstand der vorliegenden Erfindung ist auch eine elektrochemische Vorrichtung, die die erfindungsgemäße Elektrodeneinheit enthält. Diese elektrochemische Vorrichtung kann ein wiederaufladbarer Speicher für elektrische Energie, auch "Akkumulator" oder "Sekundarzelle" genannt, sein oder eine Elektrolysezelle, zum Beispiel zur Herstellung der Alkalimetalle aus den entsprechenden Polysulfiden Met₂Sₓwie hierin definiert. Die erfindungsgemäße elektrochemische Vorrichtung ist wie hierin beschrieben.

Eine bevorzugte erfindungsgemäße elektrochemische Vorrichtung ist die sogenannten Natrium-Schwefel-Zelle oder auch Natrium-Schwefelbatterie genannt. Sie ist beispielsweise in Ullmann's Encyclopedia of Industrial Chemistry, Vol. 4, D. Berndt, D. Spahrbier, Kapitel 7.2.2.2., Seiten 608 bis 609 (2003) beschrieben.

Eine Variante der erfindungsgemäßen Natrium-Schwefel-Zelle ist wie folgt aufgebaut (Variante 1) und beispielsweise in Figur 1 dargestellt, worin die Bezugszeichen die oben genannte Bedeutung haben:
Der Festelektrolyt ist ein zylindrisches einseitig geschlossenes Rohr, wie oben beschrieben, aus einem Material wie oben beschrieben, vorzugsweise Beta-Aluminiumoxid.

Der Anodenraum in Variante 1 ist das Innere des zylindrischen, einseitig geschlossenen Festelektrolyt-Rohres in dem sich das schmelzflüssige Alkalimetall-Anodenmaterial Natrium befindet. Eine größere Menge des schmelzflüssigen Alkalimetall-Anodenmaterials Natrium wird üblicherweise in einem Behälter, der mit dem Anodenraum verbunden ist und sich außerhalb der eigentlichen elektrochemischen Zelle befindet, aufbewahrt. Im entladenen Zustand der elektrochemischen Zelle ist dieser Vorratsbehälter in der Regel praktisch leer und im geladenen Zustand der elektrochemischen Zelle ist dieser Vorratsbehälter in der Regel praktisch voll. Üblicherweise ist im Inneren des zylindrischen einseitig geschlossenen Rohres neben dem schmelzflüssigen Natrium noch ein massiver oder hohler zylindrischen Körper mit ähnlichen, jedoch kleineren Abmessungen des zylindrischen einseitig geschlossenen Festelektrolyt-Rohres ("Verdränger", Bezugszeichen 1 in Figur 1) koaxial angeordnet, so dass sich zwischen der Innenwand des Festelektrolyten und der Außenwand des Verdrängens ein Ringspalt ausbildet, in dem sich das schmelzflüssige Alkalimetall-Anodenmaterial Natrium, befindet. Üblicherweise ist der Verdränger aus einem Metall gefertigt, beispielsweise Aluminium, Stahl, Edelstahl oder anderen gegen die genannten Alkalimetalle beständige Metalle.

Der Kathodenraum in Variante 1 beginnt an der äußeren Oberfläche des zylindrischen, einseitig geschlossenen Festelektrolyt-Rohres und wird von einem Gehäuse, beispielsweis aus Stahl, Edelstahl, verchromten Aluminium oder anderen vorzugsweise korrosionsbeständigen Materialien nach außen hin begrenzt, wie beispielsweise in Figur 1 dargestellt (Bezugszeichen 8).

Auf die äußere Oberfläche des zylindrischen, einseitig geschlossenen Festelektrolyt-Rohres sind, wie oben beschrieben, zunächst die nichtelektronenleitende Zwischenschicht S und darauf die poröse Feststoffelektrode aufgebracht, beispielsweise in Figur 1 unter Bezugszeichen 2 (poröse Feststoffelektrode) und Bezugszeichen 7 (nichtelektronenleitende Zwischenschicht S) gezeigt.

Das schmelzflüssige Kathodenmaterial in Variante 1 wird ausgewählt aus (A) reine Polysulfide Na₂Sₓ mit x = 2, 3, 4, oder 5, vorzugsweise 3, 4 oder 5, insbesondere 4 oder (B) Mischungen der Polysulfide aus (A) untereinander und/oder jeweils mit elementarem Schwefel oder (C) Mischungen aus Na₂S mit elementarem Schwefel und/oder den in (A) oder (B) genannten Polysulfiden Na₂Sₓ.

Bevorzugtes schmelzflüssiges Kathodenmaterial in Variante 1 ist elementarer Schwefel alleine oder in Kombination mit einem oder mehreren der voranstehend genannten Polysulfide Na₂Sₓ.

Sowohl schmelzflüssiges Kathodenmaterial als auch schmelzflüssiges Anodenmaterial sind üblicherweise mit einem Stromkreis elektrisch leitend verbunden.

Variante 1 ist eine sogenannte "Central Sodium Cell", in der das Anodenmaterial Natrium im Inneren des Festelektrolyten ist und das unter Variante 1 oben beschriebene schmelzflüssige Kathodenmaterial den Festelektrolyt umgibt.

Eine weitere Variante der erfindungsgemäßen Natrium-Schwefel-Zelle (Variante 2) ist praktisch wie Variante 1 aufgebaut, außer, dass der Kathodenraum mit dem schmelzflüssigen Kathodenmaterial - dieses wie für Variante 1 beschrieben - der Innenraum des Festelektrolyten ist, üblicherweise ohne Verdränger. Der Anodenraum mit dem schmelzflüssigen Natrium umgibt in Variante 2 den Festelektrolyten und wird von einem metallischen Gehäuse begrenzt. Variante 2 ist eine sogenannten "Central Sulfur Cell".

Bevorzugt im Sinne der Erfindung ist die Variante 1, also die Central Sodium Cell.

Die erfindungsgemäße elektrochemische Vorrichtung wird üblicherweise bei einer Temperatur im Bereich von 300 bis 400°C betrieben.

Die erfindungsgemäße elektrochemische Vorrichtung, vorzugsweise jene der Variante 1, ist üblicherweise ein Akkumulator, sie kann aber auch als Elektrolysezelle verwendet werden. Wird die erfindungsgemäße elektrochemische Vorrichtung als Elektrolysezelle verwendet, so wird üblicherweise in den Kathodenraum ein Alkalimetallsulfid Met₂S und/oder Alkalimetallpolysulfid Met₂Sₓ, gegebenenfalls in Kombination mit elementarem Schwefel, jeweils wie hierin beschrieben und definiert, vorgelegt. Der Festelektrolyt besitzt eine lonenleitfähigkeit für das entsprechende Alkalimetallion und der Anodenraum ist elektrisch leitend über einen Stromkreis mit dem Kathodenraum verbunden.

Eine im Stromkreis integrierte Spannungsquelle schickt üblicherweise elektrischen Strom durch die erfindungsgemäße elektrochemische Vorrichtung und spaltet im Kathodenraum das Alkalimetallsulfid Met₂S und/oder Alkalimetallpolysulfid Met₂Sₓ - Met₂S und Met₂Sₓ wie hierin beschrieben und definiert - vorzugsweise mit Met = Lithium, Natrium, Kalium als Alkalimetalle in die entsprechenden elementaren Alkalimetalle unter Abscheidung von Schwefel im Anodenraum.

Gegenstand der vorliegenden Anmeldung ist auch ein Verfahren zur ersten Aufladung einer elektrochemischen Vorrichtung wie sie hierin definiert ist, dadurch gekennzeichnet, dass man in dem Raum für das schmelzflüssige Kathodenmaterial eine Polysulfidverbindung (I) als Schmelze vorlegt, enthaltend: (A) reine Polysulfide Met₂Sₓ mit Met = Alkalimetall des gewünschten Alkalimetall-Anodenmaterials, ausgewählt aus Lithium, Natrium, Kalium, insbesondere Natrium und x ist abhängig von dem Alkalimetall und ist für Na = 2, 3, 4, oder 5, vorzugsweise 3, 4 oder 5, insbesondere 4 und ist für Li = 2, 3, 4, 5, 6, 7, 8, vorzugsweise 3, 4, 5, 6 7, oder 8 und ist für K = 2, 3, 4, 5, 6, vorzugsweise 3, 4 oder 5, insbesondere 5 oder (B) Mischungen der Polysulfide ein und desselben Alkalimetalls aus (A) untereinander und/oder jeweils mit elementarem Schwefel oder (C) Mischungen aus dem jeweiligen Alkalimetallsulfid Met₂S mit elementarem Schwefel und/oder den in (A) oder (B) genannten Polysulfiden Met₂Sₓ, weiterhin in dem Raum für das schmelzflüssige Anodenmaterial eine elektronenleitende Vorrichtung so installiert, dass sie die dem Anodenmaterial zugewandte Oberfläche des Festelektrolyten zumindest im unteren Bereich berührt, Kathodenraum und Anodenraum an einen elektrischen Stromkreis anschließt und durch diese elektrochemische Vorrichtung einen elektrischen Strom schickt, so dass die Polysulfidverbindung (I) elektrolytisch gespalten wird, wobei im Kathodenraum elementarer Schwefel entsteht und im Anodenraum metallisches Alkalimetall.

In dem Raum, der beim Betrieb der erfindungsgemäßen elektrochemischen Vorrichtung als Akkumulator das schmelzflüssige Alkalimetall-Anodenmaterial, wie hierin beschrieben, aufnimmt ist eine elektronenleitende Vorrichtung so installiert, dass sie die dem Anodenmaterial zugewandte Oberfläche des Festelektrolyten, zumindest im unteren Bereich, berührt und einen elektrischen Kontakt herstellt. Diese Vorrichtung kann beispielsweise der oben beschriebene Verdränger sein, welcher zumindest an einem Teil seiner Oberfläche elektrisch leitende, üblicherweise metallische, beispielsweise aus Edelstahl oder Aluminium, Federelemente angebracht hat, die mit der Innenoberfläche des Festelektrolyten in Kontakt stehen.

Der Festelektrolyt besitzt eine lonenleitfähigkeit für das entsprechende Alkalimetallion der Polysulfidverbindung (I).

Der Anodenraum ist elektrisch leitend über einen Stromkreis mit dem Kathodenraum verbunden, so dass eine Spannungsquelle die im Stromkreis integriert ist einen elektrischen Strom durch die erfindungsgemäße elektrochemische Vorrichtung schickt, so dass die Polysulfidverbindung (I) elektrolytisch gespalten wird, wobei im Kathodenraum elementarer Schwefel entsteht und im Anodenraum metallisches Alkalimetall, vorzugsweise Natrium. Hierdurch wird üblicherweise die elektrochemische Zelle geladen.

Das erste Aufladen sowie der spätere Betrieb der erfindungsgemäßen elektrochemischen Vorrichtung wird üblicherweise bei einer Temperatur im Bereich von 300 bis 400 °C durchgeführt.

Die so erstaufgeladene erfindungsgemäße elektrochemische Vorrichtung kann dann als Akkumulator fungieren und elektrische Energie an einen Verbraucher abgeben. Nachdem sie entladen ist kann sie, wie oben beschrieben, immer wieder aufgeladen werden.

Eine bevorzugte elektrochemische Vorrichtung für das Verfahren zur ersten Aufladung ist die oben beschriebene erfindungsgemäße Natrium-Schwefel-Zelle als Variante 1, beispielsweise in Figur 1 dargestellt. Dieses bevorzugte Verfahren zur ersten Aufladung einer elektrochemischen Vorrichtung wird wie oben beschrieben durchgeführt, mit folgenden Abweichungen:
Der Festelektrolyt ist ein zylindrisches einseitig geschlossenes Rohr, wie oben beschrieben, aus Beta-Aluminiumoxid.

Der Anodenraum ist das Innere des zylindrischen, einseitig geschlossenen Rohres, in dem das schmelzflüssige Alkalimetall-Anodenmaterial Natrium bei der Aufladung der Zelle erzeugt wird.

Die elektronenleitende Vorrichtung ist im Inneren des zylindrischen einseitig geschlossenen Rohres in Form eines massiven oder hohlen zylindrischen Körpers mit ähnlichen, jedoch kleineren Abmessungen des zylindrischen einseitig geschlossenen Rohres ("Verdränger", Bezugszeichen 1 in Figur 1) koaxial so angeordnet, dass sich zwischen der Innenwand des Festelektrolyten und der Außenwand des Verdrängers ein Ringspalt ausbildet und der Verdränger die Innenoberfläche des Festelektrolyten, zumindest im unteren Bereich, an mindestens einem Punkt so berührt, beispielsweise über Federelemente, dass sich ein elektrischer Kontakt ausbildet. Üblicherweise ist der Verdränger aus einem Metall gefertigt, beispielsweise Aluminium, Stahl, Edelstahl oder anderen gegen die genannten Alkalimetalle beständige Metalle.

Der Kathodenraum in Variante 1 beginnt an der äußeren Oberfläche des zylindrischen, einseitig geschlossenen Rohres und wird von einem Gehäuse, beispielsweis aus Stahl, Edelstahl, verchromten Aluminium oder anderen vorzugsweise korrosionsbeständigen Materialien nach außen hin begrenzt, wie beispielsweise in Figur 1 dargestellt (Bezugszeichen 8).

Auf die äußere Oberfläche des zylindrischen, einseitig geschlossenen Rohres des Festelektrolyten sind, wie oben beschrieben, zunächst die nichtelektronenleitende Zwischenschicht S und darauf die poröse Feststoffelektrode aufgebracht, beispielsweise in Figur 1 unter Bezugszeichen 2 (poröse Feststoffelektrode) und Bezugszeichen 7 (nichtelektronenleitende Zwischenschicht S) gezeigt.

Das schmelzflüssige Kathodenmaterial wird ausgewählt aus (A) reine Polysulfide Na₂Sₓ mit x = 2, 3, 4, oder 5, vorzugsweise 3, 4 oder 5, insbesondere 4 oder (B) Mischungen der Polysulfide aus (A) untereinander und/oder jeweils mit elementarem Schwefel oder (C) Mischungen aus Na₂S mit elementarem Schwefel und/oder den in (A) oder (B) genannten Polysulfiden Na₂Sₓ. Bevorzugtes schmelzflüssiges Kathodenmaterial sind die voran genannten Komponenten (A) oder (B).

Sowohl schmelzflüssige Kathodenmaterial als auch schmelzflüssiges Anodenmaterial sind mit einem Stromkreis elektrisch leitend verbunden.

Gegenstand der vorliegenden Anmeldung ist auch die Verwendung einer nichtelektronenleitenden Zwischenschicht S in einer Elektrodeneinheit für eine elektrochemische Vorrichtung, umfassend (i) einen Festelektrolyten, der einen Raum für schmelzflüssiges Kathodenmaterial und einen Raum für schmelzflüssiges Alkalimetall-Anodenmaterial trennt, sowie (ii) eine poröse Feststoffelektrode, die durch eine nichtelektronenleitende Zwischenschicht S von dem Festelektrolyten getrennt ist, dadurch gekennzeichnet, dass die Zwischenschicht S eine Dicke im Bereich von 1,0 bis 5 mm hat und vor der ersten Aufladung der elektrochemischen Vorrichtung vollständig mit einer Polysulfid-Zusammensetzung des Alkalimetalls, welches das Alkalimetall-Anodenmaterial bildet, getränkt ist, enthaltend (A) reine Polysulfide Met₂Sₓ mit Met =Alkalimetall des Alkalimetall-Anodenmaterials ausgewählt aus Lithium, Natrium, Kalium, insbesondere Natrium und x ist abhängig von dem Alkalimetall und ist für Na = 2, 3, 4, oder 5, vorzugsweise 3, 4 oder 5, insbesondere 4 und ist für Li = 2, 3, 4, 5, 6, 7, 8, vorzugsweise 3, 4, 5, 6 7, oder 8 und ist für K = 2, 3, 4, 5, 6, vorzugsweise 3, 4 oder 5, insbesondere 5, oder (B) Mischungen der Polysulfide ein und desselben Alkalimetalls aus (A) untereinander.

Vorteil der vorliegenden Erfindung ist, dass in der erfindungsgemäßen elektrochemischen Vorrichtung bei einem Bruch oder einer Beschädigung des Festelektrolyten verhindert oder vermindert wird, dass insbesondere im geladenen Zustand der Batterie flüssiges Natrium mit flüssigem Schwefel -, beispielsweise bei hoher Temperatur wie 300 bis 400 °C - direkt in Berührung kommt und, insbesondere direkt am Ort des Bruchs oder der Beschädigung des Festelektrolyten, eine stark exotherme Reaktion stattfindet, welche beispielsweise zur schlagartigen Verdampfung des Schwefels mit schnellem Druckaufbau in der Zelle führten würde, wobei diese beschädigt oder zerstört würde und ihren Inhalt freigäbe, der mit der umgebenden Atmosphäre heftig reagieren könnte und somit letztendlich andere Zellen oder gar die gesamte Batterie beschädigen oder zerstören würde, wobei der Innenwiderstand der intakten erfindungsgemäßen elektrochemischen Vorrichtung, trotz nichtelektronenleitender Zwischenschicht S, gering bleibt.

### Beispiele

### Beispiel 1: Zum Vergleich

### Gezielte Zerstörung einer Natrium-Schwefelzelle - ohne Zwischenschicht S - im geladenen Zustand

Es wurde eine übliche Natrium-Schwefelzelle ("Central Sodium Cell") aufgebaut aus einem zylinderförmigen unten verschlossenen Festelektrolyt aus beta"-Aluminiumoxid mit dem Innendurchmesser 5,6 cm, der Wandstärke 0,2 cm und der Länge 50 cm, in dem sich axialzentral ein massiver zylindrischer Verdrängerkörper aus Edelstahl 1.4404 (Durchmesser 5,5 cm, Länge 45,5 cm) befand, der einen Ringspalt zwischen der äußeren Oberfläche des Verdrängerkörpers und der Innenoberfläche des Festelektrolyten ausbildete, wobei der Ringspalt den Anodenraum darstellt. Direkt auf der äußeren Oberfläche des Festelektrolyten befanden sich eine 5 mm dicke Schicht Graphitfilzelektrode und eine Vorrichtung für die elektrische Kontaktierung dieser Elektrode, ergo ein Stromabnehmer. Aufgenommen war diese Elektrodeneinheit / Festelektrolyt praktisch axialzentral in einem zylindrischen Metallgehäuse aus Edelstahl mit dem Innendurchmesser von 10,8 cm und der Raum zwischen der äußeren Oberfläche des Festelektrolyten und dem Metallgehäuse stellte den Kathodenraum dar.

Die Zelle wurde auf 300°C erhitzt. Der Kathodenraum wurde mit Hilfe einer Vakuumpumpe evakuiert und dann mit ca. 5 kg geschmolzenem flüssigen Schwefel befüllt. Der Anodenraum stand nicht unter Unterdruck und wurde mit 45 g geschmolzenen Natrium aus einem externen Vorratsbehälter über ein Überlaufsystem befüllt. Messstellen für Temperatur und Druck waren im Kathodenraum an unterschiedlichen Stellen angeordnet. Am Boden des Metallgehäuses war eine T-förmige Leitung angebracht, in deren senkrechten Schenkel sich eine Berstscheibe befand, die bei 10 bar Überdruck bricht. Der waagrechte absperrbare Schenkel der Leitung wurde zum Befüllen des Kathodenraums mit Schwefel benutzt.

Mit einer hydraulischen Pumpe wurde unter den Bedingungen gegen Natrium praktisch inertes hochsiedendes Öl in den praktisch komplett mit flüssigem Natrium gefüllten Anodenraum gepumpt und somit auch auf die innere Oberfläche des Festelektrolyten Druck ausgeübt. Bei ca. 80 bar Druck wurde der Festelektrolyt durch Bruch zerstört. Beim Bruch des Festelektrolyten kamen Natrium und Schwefel direkt in Kontakt und reagierten heftig unter Bildung von Hitze und Druck.

Die Temperatur in dem oberen Teil der Zelle stieg innerhalb der ersten Sekunde nach dem Bruch des Festelektrolyten auf über 1200°C an. Die plötzlichen Temperaturanstiege an einigen Stellen in der Zelle führten innerhalb von Millisekunden zur Verdampfung einer solch großen Menge an Schwefel, dass lokal Drücke von 10 bar auftraten. Dadurch erreichte der GesamtDruck innerhalb der Zelle während der ersten Sekunde mindestens 11 bar, ein Druck bei dem die Berstscheibe brach.

### Beispiel 2: Erfindungsgemäß

### Gezielte Zerstörung einer Natrium-Schwefelzelle - mit Zwischenschicht S - im geladenen Zustand

Der Versuchsaufbau war analog Beispiel 1, allerdings befand sich auf der äußeren Oberfläche des Festelektrolyten eine 1 mm dicke Schicht aus verfilzten polykristallinen Aluminiumoxidfasern, als Saffil® Paper der Firma Saffil im Handel. An diese Schicht schloss sich unmittelbar eine 5 mm dicke Schicht Graphitfilzelektrode an, die mit einer Vorrichtung für die elektrische Kontaktierung dieser Elektrode versehen war.

Die Zelle wurde auf 300°C erhitz. Der Kathodenraum wurde mit Hilfe einer Vakuumpumpe auf einen Druck von ca. 20 mbar (abs.) gebracht und dann mit ca. 5 kg geschmolzenem flüssigen Na₂S₅ (Dinatriumpentasulfid) befüllt und somit die Zwischenschicht S und die poröse Feststoffelektrode mit Na₂S₅ getränkt. Im mit Stickstoff befüllten Anodenraum befand sich zunächst (am Anfang des Versuchs) kein Natrium; er wurde dann mit Natrium befüllt, indem man einen elektrischen Strom durch die Zelle schickte und das Dinatriumpentasulfid elektrochemisch zersetzte. So wurde die Zelle geladen.

Messstellen für Temperatur und Druck waren im Kathodenraum an unterschiedlichen Stellen angeordnet.
Die Zelle wurde bis 80% geladen, d.h. 80% des zu Beginn eingefüllten Dinatriumpentasulfids (Na₂S₅) wurden elektrochemisch zu elementarem Natrium und elementarem Schwefel umgesetzt.

Der Festelektrolyt wurde dann mittels eines hydraulischen Drucks von 80 bar, wie oben in Beispiel 1 beschrieben, zerstört, wobei eine wenig heftige Reaktion beobachtet wurde.

Der Temperaturanstieg innerhalb der Zelle verlief langsam über Minuten und nur an wenigen Stellen bis ca. 470° C. Der Druck stieg innerhalb der Zelle lediglich um 0,6 bar (abs.) innerhalb von einer Minute an, und die Berstscheibe blieb intakt. Der Druckaufbau in der Zelle lag immer noch im Bereich des normalen Betriebsdrucks einer Natrium-Schwefelzelle.

Mit diesem Versuch wurde gezeigt, dass die Zwischenschicht S eine unkontrollierte und brisante Reaktion bei der Zerstörung eines Festelektrolyten einer Natrium-Schwefelzelle verhindert und somit die Sicherheit einer solchen Zelle erhöht.

## Patentansprüche

1. Elektrodeneinheit für eine elektrochemische Vorrichtung, umfassend (i) einen Festelektrolyten (3), der einen Raum (4) für schmelzflüssiges Kathodenmaterial, ausgewählt aus der Gruppe bestehend aus elementarem Schwefel und Polysulfid des Alkalimetall-Anodenmaterials, und einen Raum (5) für schmelzflüssiges Alkalimetall-Anodenmaterial trennt sowie (ii) eine poröse Feststoffelektrode (2), die sich im Raum (4) für das Kathodenmaterial direkt benachbart zum Festelektrolyten (3) befindet, wobei sich zwischen der Feststoffelektrode (2) und dem Festelektrolyten (3) eine nichtelektronenleitende Zwischenschicht S (7) befindet, **dadurch gekennzeichnet, dass** diese Zwischenschicht S (7) eine Dicke im Bereich von 1,0 bis 5 mm hat und vor der ersten Aufladung der elektrochemischen Vorrichtung vollständig mit einer Polysulfid-Zusammensetzung, enthaltend (A) reine Polysulfide Met₂Sₓ mit Met =Alkalimetall des Alkalimetall-Anodenmaterials ausgewählt aus Lithium, Natrium, Kalium und x ist abhängig von dem Alkalimetall und ist für Na = 2, 3, 4, oder 5 und ist für Li = 2, 3, 4, 5, 6, 7, 8 und ist für K = 2, 3, 4, 5, 6 oder (B) Mischungen der Polysulfide ein und desselben Alkalimetalls aus (A) untereinander, getränkt ist.

2. Elektrodeneinheit gemäß Anspruch 1, **dadurch gekennzeichnet, dass** die Zwischenschicht S (7) eine Dicke im Bereich von 1,0 bis 3 mm hat.

3. Elektrodeneinheit gemäß einem der Ansprüche 1 bis 2, **dadurch gekennzeichnet, dass** die nicht elektronenleitende Zwischenschicht S eine offene Porosität im Bereich von 50 bis 99,99 % aufweist.

4. Elektrodeneinheit gemäß einem der Ansprüche 1 bis 3, **dadurch gekennzeichnet, dass** die Grundlage der nichtelektronenleitenden Zwischenschicht S (7) ein flächiges Gebilde von Fasern ausgewählt aus Aluminiumoxid (Al₂O₃), Siliziumdioxid, Mischoxiden des Aluminiums mit Silizium, Silikaten und Alumosilikaten ist.

5. Elektrodeneinheit gemäß einem der Ansprüche 1 bis 4, **dadurch gekennzeichnet, dass** der Festelektrolyt (3) ein einseitig verschlossener zylindrischer Formkörper ist.

6. Elektrochemische Vorrichtung, enthaltend die Elektrodeneinheit wie sie in den Ansprüchen 1 bis 5 definiert ist.

7. Elektrochemische Vorrichtung gemäß Anspruch 6, **dadurch gekennzeichnet, dass** die elektrochemische Vorrichtung eine Natrium-Schwefelzelle ist.

8. Verfahren zur Herstellung einer nichtelektronenleitenden Zwischenschicht S (7) in einer Elektrodeneinheit, wie sie in den Ansprüchen 1 bis 5 definiert ist, **dadurch gekennzeichnet, dass** man das die nichtelektronenleitende Zwischenschicht S (7) bildende poröse Ausgangsmaterial einem Druck von weniger als 1 atm aussetzt und es mit der geschmolzenen Polysulfid-Zusammensetzung des Alkalimetalls, welches das Alkalimetall-Anodenmaterial bildet, enthaltend (A) reine Polysulfide Met₂Sₓ mit Met = Alkalimetall des Alkalimetall-Anodenmaterials ausgewählt aus Lithium, Natrium, Kalium und x ist abhängig von dem Alkalimetall und ist für Na = 2, 3, 4, oder 5 und ist für Li = 2, 3, 4, 5, 6, 7, 8 und ist für K = 2, 3, 4, 5, 6 oder (B) Mischungen der Polysulfide ein und desselben Alkalimetalls aus (A) untereinander, tränkt.

9. Verfahren zur ersten Aufladung einer elektrochemischen Vorrichtung, wie sie in den Ansprüchen 6 bis 7 definiert ist, **dadurch gekennzeichnet, dass** man in dem Raum (4) für das schmelzflüssige Kathodenmaterial eine Polysulfidverbindung (I) als Schmelze vorlegt, enthaltend: (A) reine Polysulfide Met₂Sₓ mit Met = Alkalimetall des gewünschten Alkalimetall-Anodenmaterials, ausgewählt aus Lithium, Natrium, Kalium, x ist abhängig von dem Alkalimetall und ist für Na = 2, 3, 4, oder 5 und ist für Li = 2, 3, 4, 5, 6, 7, 8 und ist für K = 2, 3, 4, 5, 6 oder (B) Mischungen der Polysulfide ein und desselben Alkalimetalls aus (A) untereinander und/oder jeweils mit elementarem Schwefel oder (C) Mischungen aus dem jeweiligen Alkalimetallsulfid Met₂S mit elementarem Schwefel und/oder den in (A) oder (B) genannten Polysulfiden Met₂Sₓ, weiterhin in dem Raum (5) für das schmelzflüssige Anodenmaterial eine elektronenleitende Vorrichtung so installiert, dass sie die dem Anodenmaterial zugewandte Oberfläche des Festelektrolyten (3) zumindest im unteren Bereich berührt, Kathodenraum (4) und Anodenraum (5) an einen elektrischen Stromkreis anschließt und durch diese elektrochemische Vorrichtung einen elektrischen Strom schickt, so dass die Polysulfidverbindung (I) elektrolytisch gespalten wird, wobei im Kathodenraum (4) elementarer Schwefel entsteht und im Anodenraum (5) metallisches Alkalimetall.

10. Verwendung einer nichtelektronenleitenden Zwischenschicht S (7) mit einer Dicke im Bereich von 1,0 bis 5 mm in einer Elektrodeneinheit für eine elektrochemische Vorrichtung, umfassend (i) einen Festelektrolyten (3), der einen Raum (4) für schmelzflüssiges Kathodenmaterial - wie in Anspruch 1 definiert - und einen Raum (5) für schmelzflüssiges Alkalimetall-Anodenmaterial trennt, sowie (ii) eine poröse Feststoffelektrode (2), die durch eine nichtelektronenleitende Zwischenschicht S (7) von dem Festelektrolyten (3) getrennt ist, **dadurch gekennzeichnet, dass** die nichtelektronenleitende Zwischenschicht S (7) vor der ersten Aufladung der elektrochemischen Vorrichtung vollständig mit einer Polysulfid-Zusammensetzung des Alkalimetalls, welches das Alkalimetall-Anodenmaterial bildet, enthaltend (A) reine Polysulfide Met₂Sₓ mit Met=Alkalimetall des Alkalimetall-Anodenmaterials ausgewählt aus Lithium, Natrium, Kalium, x ist abhängig von dem Alkalimetall und ist für Na = 2, 3, 4, oder 5und ist für Li = 2, 3, 4, 5, 6, 7, 8 und ist für K = 2, 3, 4, 5, 6 oder (B) Mischungen der Polysulfide ein und desselben Alkalimetalls aus (A) untereinander, getränkt ist.

## Claims

1. An electrode unit for an electrochemical device, comprising (i) a solid electrolyte (3) which divides a space (4) for molten cathode material selected from the group consisting of elemental sulfur and polysulfide of the alkali metal anode material and a space (5) for molten alkali metal anode material and (ii) a porous solid-state electrode (2) directly adjacent to the solid electrolyte (3) within the space (4) for the cathode material, with a non-electron-conducting intermediate layer S (7) present between the solid-state electrode (2) and the solid electrolyte (3), wherein this intermediate layer S (7)has a thickness in the range from 1.0 to 5 mm and, before the first charge of the electrochemical device, has been impregnated fully with a polysulfide composition comprising (A) pure polysulfides Met₂Sₓ with Met = alkali metal of the alkali metal anode material selected from lithium, sodium, potassium, and x is dependent on the alkali metal and is 2, 3, 4 or 5 for Na and is 2, 3, 4, 5, 6, 7, 8 for Li and is 2, 3, 4, 5, 6 for K, or (B) mixtures of the polysulfides of one and the same alkali metal from (A) with one another.

2. The electrode unit according to claim 1, wherein the intermediate layer S (7) has a thickness in the range from 1.0 to 3 mm.

3. The electrode unit according to either of claims 1 and 2, wherein the non-electron-conducting intermediate layer S (7) has an open porosity in the range from 50 to 99.99 %.

4. The electrode unit according to any of claims 1 to 3, wherein the basis of the non-electron-conducting intermediate layer S (7) is a flat structure of fibers selected from alumina (Al₂O₃), silicon dioxide, mixed oxides of aluminum with silicon, silicates and aluminosilicates.

5. The electrode unit according to any of claims 1 to 4, wherein the solid electrolyte (3) is a cylindrical shaped body closed at one end.

6. An electrochemical device comprising the electrode unit as defined in claims 1 to 5.

7. The electrochemical device according to claim 6, wherein the electrochemical device is a sodium-sulfur cell.

8. A process for producing a non-electron-conducting intermediate layer S (7) in an electrode unit as defined in claims 1 to 5, which comprises subjecting the porous starting material that forms the non-electron-conducting intermediate layer S (7) to a pressure of less than 1 atm and impregnating it with the molten polysulfide composition of the alkali metal that forms the alkali metal anode material comprising (A) pure polysulfides Met₂Sₓ with Met = alkali metal of the alkali metal anode material selected from lithium, sodium, potassium, and x is dependent on the alkali metal and is 2, 3, 4 or 5 for Na and is 2, 3, 4, 5, 6, 7, 8 for Li and is 2, 3, 4, 5, 6 for K, or (B) mixtures of the polysulfides of one and the same alkali metal from (A) with one another.

9. A process for first charging of an electrochemical device as defined in claims 6 and 7, which comprises initially charging the space (4) for the molten cathode material with a polysulfide compound (I) as a melt, comprising: (A) pure polysulfides Met₂Sₓ with Met = alkali metal of the desired alkali metal anode material, selected from lithium, sodium, potassium, x is dependent on the alkali metal and is 2, 3, 4 or 5 for Na and is 2, 3, 4, 5, 6, 7, 8 for Li and is 2, 3, 4, 5, 6 for K, or (B) mixtures of the polysulfides of one and the same alkali metal from (A) with one another and/or in each case with elemental sulfur or (C) mixtures of the particular alkali metal sulfide Met₂S with elemental sulfur and/or the polysulfides Met₂Sₓ mentioned in (A) or (B), and additionally installing, in the space (5) for the molten anode material, an electron-conducting device in such a way that it touches the surface of the solid electrolyte (3) facing the anode material at least in the lower region, connects cathode space (4) and anode space (5) to an electrical circuit and sends an electrical current through this electrochemical device, such that the polysulfide compound (I) is cleaved electrolytically, forming elemental sulfur in the cathode space (4) and metallic alkali metal in the anode space (5).

10. The use of a non-electron-conducting intermediate layer S (7) having a thickness in the range from 1.0 to 5 mm in an electrode unit for an electrochemical device, comprising (i) a solid electrolyte (3) which divides a space (4) for molten cathode material - as defined in claim 1 - and a space (5) for molten alkali metal anode material, and (ii) a porous solid-state electrode (2) which is separated from the solid electrolyte (3) by a non-electron-conducting intermediate layer S (7), wherein the non-electron-conducting intermediate layer S (7), before the first charge of the electrochemical device, has been impregnated fully with a polysulfide composition of the alkali metal that forms the alkali metal anode material, comprising (A) pure polysulfides Met₂Sₓ with Met = alkali metal of the alkali metal anode material selected from lithium, sodium, potassium, x is dependent on the alkali metal and is 2, 3, 4 or 5 for Na and is 2, 3, 4, 5, 6, 7, 8 for Li and is 2, 3, 4, 5, 6 for K, or (B) mixtures of the polysulfides of one and the same alkali metal from (A) with one another.

## Revendications

1. Unité d'électrode pour un dispositif électrochimique, comprenant (i) un électrolyte solide (3), qui sépare une chambre (4) pour un matériau cathodique en fusion, choisi dans le groupe constitué par le soufre élémentaire et un polysulfure du matériau anodique de métal alcalin, et une chambre (5) pour un matériau anodique de métal alcalin en fusion, ainsi que (ii) une électrode solide poreuse (2), qui se trouve dans la chambre (4) pour le matériau cathodique de manière directement voisine à l'électrolyte solide (3), une couche intermédiaire non conductrice d'électrons S (7) se trouvant entre l'électrode solide (2) et l'électrolyte solide (3), **caractérisée en ce que** cette couche intermédiaire S (7) a une épaisseur dans la plage allant de 1,0 à 5 mm et, avant la première charge du dispositif électrochimique, est complètement imprégnée avec une composition de polysulfures, contenant (A) des polysulfures purs Met₂Sₓ avec Met = métal alcalin du matériau anodique de métal alcalin choisi parmi le lithium, le sodium, le potassium et x est dépendant du métal alcalin et est pour Na = 2, 3, 4 ou 5, et est pour Li = 2, 3, 4, 5, 6, 7, 8, et est pour K = 2, 3, 4, 5, 6, ou (B) des mélanges des polysulfures d'un même métal alcalin de (A) les uns avec les autres.

2. Unité d'électrode selon la revendication 1, **caractérisée en ce que** la couche intermédiaire S (7) a une épaisseur dans la plage allant de 1,0 à 3 mm.

3. Unité d'électrode selon l'une quelconque des revendications 1 à 2, **caractérisée en ce que** la couche intermédiaire non conductrice d'électrons S présente une porosité ouverte dans la plage allant de 50 à 99, 99 %.

4. Unité d'électrode selon l'une quelconque des revendications 1 à 3, **caractérisée en ce que** la base de la couche intermédiaire non conductrice d'électrons S (7) est une structure plate de fibres choisies parmi l'oxyde d'aluminium (Al₂O₃), le dioxyde de silicium, les oxydes mixtes d'aluminium avec du silicium, les silicates et les alumosilicates.

5. Unité d'électrode selon l'une quelconque des revendications 1 à 4, **caractérisée en ce que** l'électrolyte solide (3) est un corps moulé cylindrique fermé d'un côté.

6. Dispositif électrochimique, contenant l'unité d'électrode telle que définie dans les revendications 1 à 5.

7. Dispositif électrochimique selon la revendication 6, **caractérisé en ce que** le dispositif électrochimique est une cellule sodium-soufre.

8. Procédé de fabrication d'une couche intermédiaire non conductrice d'électrons S (7) dans une unité d'électrode, telle que définie dans les revendications 1 à 5, **caractérisé en ce que** le matériau de départ poreux formant la couche intermédiaire non conductrice d'électrons S (7) est exposé à une pression de moins de 1 atm et est imprégné avec la composition de polysulfures fondue du métal alcalin qui forme le matériau anodique de métal alcalin, contenant (A) des polysulfures purs Met₂Sₓ avec Met = métal alcalin du matériau anodique de métal alcalin choisi parmi le lithium, le sodium, le potassium et x est dépendant du métal alcalin et est pour Na = 2, 3, 4 ou 5, et est pour Li = 2, 3, 4, 5, 6, 7, 8, et est pour K = 2, 3, 4, 5, 6, ou (B) des mélanges des polysulfures d'un même métal alcalin de (A) les uns avec les autres.

9. Procédé pour la première charge d'un dispositif électrochimique, tel que défini dans les revendications 6 à 7, **caractérisé en ce qu'**un composé de polysulfures (I) sous la forme d'une masse fondue est chargé dans la chambre (4) pour le matériau cathodique en fusion, contenant : (A) des polysulfures purs Met₂Sₓ avec Met = métal alcalin du matériau anodique de métal alcalin souhaité, choisi parmi le lithium, le sodium, le potassium, x est dépendant du métal alcalin et est pour Na = 2, 3, 4 ou 5, et est pour Li = 2, 3, 4, 5, 6, 7, 8, et est pour K = 2, 3, 4, 5, 6, ou (B) des mélanges des polysulfures d'un même métal alcalin de (A) les uns avec les autres et/ou respectivement avec du soufre élémentaire ou (C) des mélanges du sulfure de métal alcalin respectif Met₂S avec du soufre élémentaire et/ou les polysulfures Met₂Sₓ indiqués en (A) ou (B), et un dispositif conducteur d'électrons est installé dans la chambre (5) pour le matériau anodique en fusion, de telle sorte qu'il soit en contact avec la surface, tournée vers le matériau anodique, de l'électrolyte solide (3) au moins dans la zone inférieure, la chambre cathodique (4) et la chambre anodique (5) sont connectées à un circuit électrique et un courant électrique est envoyé au travers de ce dispositif électrochimique, de telle sorte que le composé de polysulfures (I) soit clivé électrolytiquement, du soufre élémentaire se formant dans la chambre cathodique (4) et du métal alcalin métallique dans la chambre anodique (5).

10. Utilisation d'une couche intermédiaire non conductrice d'électrons S (7) ayant une épaisseur dans la plage allant de 1,0 à 5 mm dans une unité d'électrode pour un dispositif électrochimique, comprenant (i) un électrolyte solide (3), qui sépare une chambre (4) pour un matériau cathodique en fusion, tel que défini dans la revendication 1, et une chambre (5) pour un matériau anodique de métal alcalin en fusion, ainsi que (ii) une électrode solide poreuse (2), qui est séparée par une couche intermédiaire non conductrice d'électrons S (7) de l'électrolyte solide (3), **caractérisée en ce que** la couche intermédiaire non conductrice d'électrons S (7) est, avant la première charge du dispositif électrochimique, complètement imprégnée avec une composition de polysulfures du métal alcalin qui forme le matériau anodique de métal alcalin, contenant (A) des polysulfures purs Met₂Sₓ avec Met = métal alcalin du matériau anodique de métal alcalin choisi parmi le lithium, le sodium, le potassium, x est dépendant du métal alcalin et est pour Na = 2, 3, 4 ou 5, et est pour Li = 2, 3, 4, 5, 6, 7, 8, et est pour K = 2, 3, 4, 5, 6, ou (B) des mélanges des polysulfures d'un même métal alcalin de (A) les uns avec les autres.
